# EUROPEAN PATENT APPLICATION

(11) **EP 4 068 123 A1**
(43) Date of publication of application: **05.10.2022**
(21) Application number: 20892913.3
(22) Date of filing: 07.10.2020
(51) Int. Cl.: G06F 17/18, G06Q 40/06, G06F 16/901, G06F 16/904

(54) **DEFINITE VALUE AND ESTIMATED VALUE-BASED DATA QUANTIZATION METHOD**

(30) Priority: 25.11.2019 KR 20190151843
(71) Applicant: Titechnology Co., Ltd., Busan 48059 (KR)
(72) Inventor: KIM, Dong Hun, Tongyeong-si, Gyeongsangnam-do 53013 (KR)
(74) Representative: Caspary, Karsten
(86) International application number: PCT/KR2020/013647
(87) International publication number: WO 2021/107386

(57) **Abstract**

The present invention may provide, to quantize data including a definite value and an estimated value, a definite value and estimated value-based data quantization method comprising the steps of: a data quantization apparatus collecting, from at least two information manager-side apparatuses, data corresponding to a pre-set definite value for each period of a previous section pre-set on the basis of a current date, an estimated value and definite value for a current year on the basis of the current date, and an estimated value for each period of a subsequent section pre-set based on the current date; calculating at least one comparison reference value on the basis of a provision value after collecting the provision value that can be compared with the estimated value and the definite value; and quantizing the data for each period and for each section via a method for assigning a weight to the current year for each period, and each period of the previous section and subsequent section, by comparing the definite value for each period of the previous section, the definite value for each section of the current year, and the estimated value for each period of the subsequent section with the comparison reference value.

## Description

### TECHNICAL FIELD

The present invention relates to a data quantization method based on definite values and estimated values.

### BACKGROUND ART

As a new digital business strategy, Fintech is emerging as a new and valuable financial and banking service. Fintech is a next-generation financial technique that can reorganize banking industry from electronic payments to asset management, and from individual banking transactions to crowdfunding. It is also defined as a technique-oriented startup simultaneously possessing financial and banking services and intelligent information techniques that innovate the products and services provided by traditional financial and banking services.

As data on financial and banking service customers are accumulated, banks are trying to provide new customer experiences and create new values based on data analysis. One of the new values is development of new investment customers. In the same manner as maintaining customers located on the long-tail or optimizing the cost of developing new customers by allowing the consumers to create and distribute information that is valuable to the customers using social media techniques in order to complement traditional and expensive customer management methods, fintech, particularly agent-based digital advisors or robo-advisors, may also reduce the effort of costeffectively identifying customers' investment propensity and recommending investment products to the customers belonging to the long-tail group, in addition to counselling the existing high-cost customer investments.

In addition, techniques of estimating current or future data based on various data, for example, past data, are developed recently with advancement of information and communication techniques. For example, services for estimating and predicting current or future performance based on past performance data are provided.

However, a method of quantizing various data is essential in order to provide the services, and although researches on the method are under progress, it is still insufficient.

[Prior Art Document] (Patent Document 1) Korean Patent Registration No. 10-1913591 (Registered on Oct. 25, 2018)

### DISCLOSURE OF INVENTION

### TECHNICAL PROBLEM

Therefore, the present invention has been made in view of the above problems, and it is an object of the present invention to provide a data quantization method based on definite values and estimated values, which can facilitate data management and analysis by quantizing data in a method of collecting a definite value of each period of a previous section based on the current date, an estimated value and a definite value of each period of a section including the current date, and an estimated value of each period of a subsequent section, and assigning a weight using the collected estimated and definite values and a comparison reference value.

In addition, the present invention provides a data quantization method based on definite values and estimated values, which allows a user to easily recognize complex data by providing quantized data in the form of a graph.

In addition, the present invention provides a data quantization method based on definite values and estimated values, which can increase user's accessibility to data analysis by providing a graph for comparison in which a graph corresponding to association data associated with data is included in a graph of quantized data.

The problem to be solved by the present invention is not limited to those mentioned above, and unmentioned other problems to be solved can be clearly understood by those skilled in the art from the following description.

### TECHNICAL SOLUTION

To accomplish the above objects, according to one aspect of the present invention, there is provided a data quantization method based on definite values and estimated values, the method comprising the steps of: collecting, by a data quantization apparatus from at least two information manager-side apparatuses, data corresponding to a definite value of each preset period of a preset previous section based on a current date, an estimated value and a definite value of a current year based on the current date, and an estimated value of each period of a preset subsequent section based on the current date; collecting a provision value that can be compared with the estimated values and the definite values, and calculating at least one comparison reference value on the basis of the provision value; and quantizing the data of each period and section in a method of assigning a weight to the current year of each period and to each period of the previous section and subsequent section, by comparing the definite value of each period of the previous section, the definite value of each period of the current year, and the estimated value of each period of the subsequent section with the comparison reference value.

According to the present invention, the quantizing step may include the steps of: calculating an average value for each period or each section using the definite value of each period of the previous section, the definite value of each period of the current year, and the estimated value of each period of the subsequent section; and calculating a score for each period of the previous section, the current year, and the subsequent section, by assigning a negative weight when the calculated average value is greater than the comparison reference value, and assigning a positive otherwise.

According to the present invention, the data quantization method may further include the steps of: calculating a total score of the previous section, the current year, and the subsequent section based on the score of each period of the previous section, the current year, and the subsequent section; and generating a quantized graph using the total score and the score of each period of the previous section, the current year, and the subsequent section.

According to the present invention, the data quantization method may further include the steps of: receiving association data related to the data from the outside; and generating a comparative graph including a graph corresponding to the association data in a quantized graph.

According to the present invention, the collected data may be estimated and definite values of performance, and the provision value for comparison may be net income and operating income, and an association data is an index-related graph.

According to the present invention, the step of generating the comparison reference value may include the step of collecting the provision value through analysis of the data provided by a medium that posts data related to the provision value on the Internet, and then generating the comparison reference value on the basis of the collected provision value.

### ADVANTAGEOUS EFFECTS

According to the technical solution of the present invention described above, it is possible to facilitate data management and analysis by quantizing data in a method of collecting a definite value of each period of a previous section based on the current date, an estimated value and a definite value of each period of a section including the current date, and an estimated value of each period of a subsequent section, and assigning a weight using the collected estimated and definite values and a comparison reference value.

In addition, according to the technical solution of the present invention described above, as quantized data is provided in the form of a graph, it is possible to improve accessibility that allows a user to easily recognize complex data.

In addition, according to the technical solution of the present invention described above, user's accessibility to data analysis may be increased by providing a graph for comparison in which a graph corresponding to association data associated with data is included in a graph of quantized data.

### BRIEF DESCRIPTION OF THE DRAWINGS

FIG. 1 is a view showing the overall configuration of a data quantization system based on definite values and estimated values according to an embodiment of the present invention.
FIG. 2 is a block diagram showing a detailed configuration of a data quantization apparatus according to an embodiment of the present invention.
FIG. 3 is a flowchart illustrating the steps of processing data by a data quantization apparatus according to an embodiment of the present invention.
FIG. 4 is an exemplary view showing a graph for comparison provided by a data quantization apparatus according to an embodiment of the present invention.

### BEST MODE FOR CARRYING OUT THE INVENTION

Hereinafter, specific embodiments of the present invention will be described with reference to the drawings. The following detailed description is provided for comprehensive understanding of the methods, apparatuses, and/or systems described in this specification. However, this is merely an example, and the present invention is not limited thereto.

In describing the embodiments of the present invention, when it is determined that detailed description of a known technique related to the present invention may unnecessarily obscure the gist of the present invention, the detailed description will be omitted. In addition, the terms described below are terms defined in consideration of functions of the present invention, and may vary according to the intention of a user or an operator, custom, or the like. Therefore, the definitions should be made based on the content throughout this specification. The terms used in the detailed description are only to describe the embodiments of the present invention, and should not be restrictive. Unless explicitly used otherwise, expressions of singular forms include a meaning of plural forms. In this description, expressions such as "comprise" or "provide" are intended to indicate certain features, numbers, steps, operations, elements, or some or a combination of these, and should not be construed to exclude the presence or possibility of one or more other features, numbers, steps, operations, elements, or some or a combination of these, other than those described.

Hereinafter, an apparatus and method for quantizing data based on definite values and estimated values will be described with reference to the accompanying drawings.

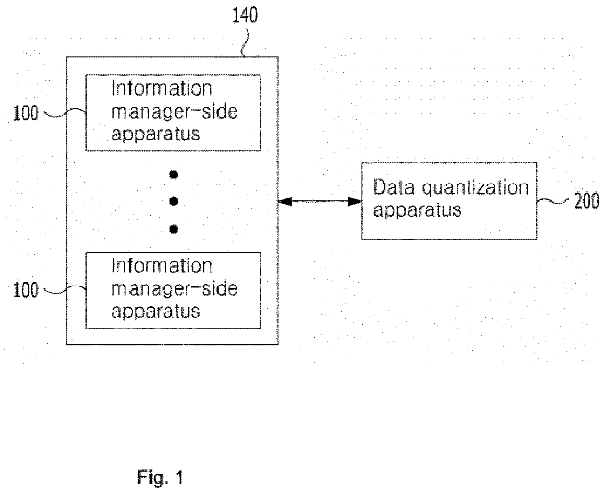

FIG. 1 is a view showing the overall configuration of a data quantization system based on definite values and estimated values according to an embodiment of the present invention.

As shown in FIG. 1, the data quantization system may include a plurality of information manager-side apparatuses 100 and a data quantization apparatus 200 connected to each other through a network. An apparatus and method for granting recommendation reward points will be described.

The information manager-side apparatus 100 is a means for managing data corresponding to estimated values and definite values for the data quantization apparatus 200, and for example, it may be a computing device managed by a securities company, a school, a company managed by financial statements, or the like, but it is not limited thereto.

That is, the information manager-side apparatus 100 may manage an estimated value and a definite value of each period during the periods before and after the period, which are set in advance based on the current year, and may provide the estimated value and the definite value to the data quantization apparatus 200. Specifically, the information manager-side apparatus 100 may manage definite values of each preset period, for example, quarterly definite values, of previous years on the basis of the current year, quarterly estimated values of the current year and quarterly estimated values of subsequent years on the basis of the definite values, and the like, and may also change the estimated values to definite values as quarters are settled in the current year.

For example, when the current reference date of December 31, 2019 is set as a reference, the information manager-side apparatus 100 may set and manage the quarterly estimated values of the next year on the basis of the quarterly definite values of the current year based on the current date (hereinafter, referred to as the 'current reference date'), and manage the definite values of the last year based on the current reference date.

In addition, the information manager-side apparatus 100 may change the quarterly estimated values of the next year to definite values as the quarters of the next year reach.

In an embodiment of the present invention, the information manager-side apparatus 100 may transmit the data described above, i.e., the estimated values and the definite values, to the data quantization apparatus 200 in rea-time.

Meanwhile, according to an embodiment of the present invention, although a preset period has been described as a quarter, it may be daily, weekly, monthly, yearly, or the like, and is not limited thereto. That is, the preset period may be determined by the data quantization apparatus 200.

In addition, in an embodiment of the present invention, the information manager-side apparatus 100 may provide at least one or more provision values for comparison. For example, the information manager-side apparatus 100 may provide operating income and net income as provision values when data corresponding to estimated values and definite values related to performance are provided, and provide a provision value such as an achievement rate of research and development or the like when data corresponding to estimated values and definite values related to research and development is provided.

Although an example of receiving a provision value from the information manager-side apparatus 100 has been described in the embodiment of the present invention, the data quantization apparatus 200 may collect the provision value through big data analysis. Specifically, the data quantization apparatus 200 may collect provision values on the basis of data opened through a website (a website operated by an analyst or the like), which is related to data corresponding to estimated values and definite values related to performance, and the Internet.

The data quantization apparatus 200 may calculate an average value on the basis of the provision values provided by a plurality of information manager-side apparatuses 100 and the number of information managers who have provided the provision values, and calculate a score of each period in a manner of setting the average value as a comparison reference value and then assigning a weight through comparison of the set comparison reference value with the definite and estimated values of a preset period. Specifically, the data quantization apparatus 200 may calculate a score of each period by assigning a preset negative weight (-a) when the comparison reference value is greater than the definite value (estimated value) of each period, and calculate a score of each period by assigning a preset positive weight (a) when the comparison reference value is smaller than or equal to the definite value (estimated value) of each period.

In addition, the data quantization apparatus 200 may calculate a total score of each year in a manner of calculating a total score of a corresponding year using the score of each period. Specifically, the data quantization apparatus 200 may calculate a total score of the current year using quarterly scores of the current year, calculate a total score of the last year using quarterly scores of the last year, and calculate a total score of the next year using quarterly scores of the next year.

On the other hand, the data quantization apparatus 200 may generate and provide a quantized graph on the basis of the score of each period and the total score of each year, and provide data that can compare the tendency of change in the association data through comparison of data associated with data (hereinafter, referred to as 'association data') with the quantized graph.

The data quantization apparatus 200 may provide a graph using the score of each period within a section and a cumulative score obtained by summing the scores of each period within a section based on the section set by the user, and provide a graph that can be compared by reflecting the association data within the section set by the user on the graph.

Although an example of receiving a provision value from the information manager-side apparatus 100 has been described in the embodiment of the present invention, the data quantization apparatus 200 may collect the provision value through big data analysis. Specifically, the data quantization apparatus 200 may collect provision values on the basis of data opened through a website (a website operated by an analyst or the like), which is related to data corresponding to estimated values and definite values related to performance, and the Internet.

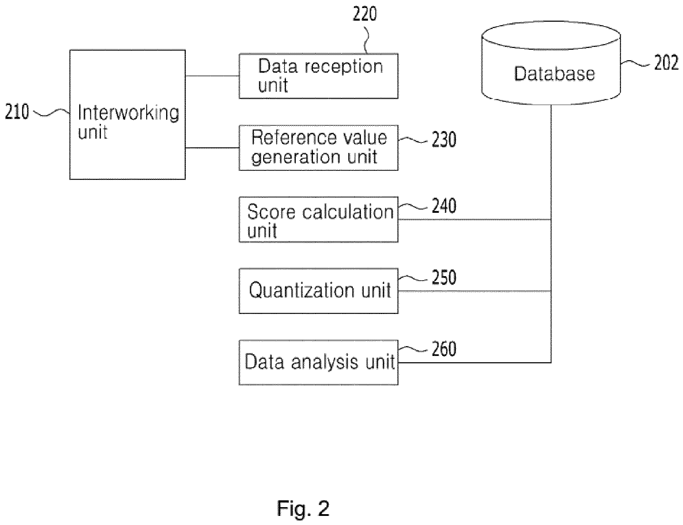

To this end, as shown in FIG. 2, the data quantization apparatus 200 according to an embodiment of the present invention may include an interworking unit 210 for interworking with the information manager-side apparatus 100; a data reception unit 220 for receiving data from the information manager-side apparatus 100 connected through the interworking unit 210 and storing the data in a database 202; a reference value generation unit 230 for generating a comparison reference value based on the provision value provided by the information manager-side apparatus 100; a score calculation unit 240 for calculating a score of each period based on a preset weight using the data stored in the database 202 and the comparison reference value; a quantization unit 250 for generating a quantized graph using the score of each period; and a data analysis unit 260 for providing a comparative graph that reflects association data in the quantized graph, and providing a comparison result data.

In an embodiment of the present invention, the interworking unit 210 may interwork with various media on the Internet, for example, a research and development management medium, an information medium managed by an analyst, a medium operated by an organization, and the like, and may collect data managed in each of the media through the interworking, and acquire a provision value by analyzing the collected data. In this case, the reference value generation unit 230 may calculate a comparison reference value on the basis of a result of adding the number of media providing the provision value and the provision value.

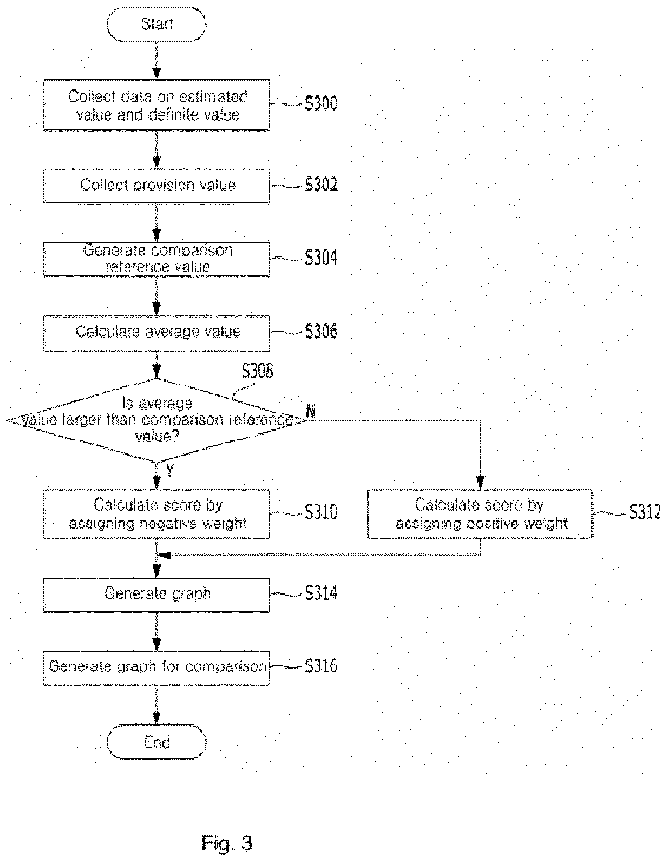

A process of quantizing data including estimated values and definite values by the data quantization apparatus 200 having the configuration as described above will be described with reference to FIG. 3.

FIG. 3 is a flowchart illustrating a process of quantizing data of estimated values and definite values by the data quantization apparatus 200 according to an embodiment of the present invention.

For convenience of explanation, it will be described assuming that the period is a quarter, and the current reference date is December 31, 2019.

As shown in FIG. 3, the data quantization apparatus 200 is provided with quarterly definite values of the previous year 2018, quarterly definite values of the current year, and quarterly estimated values of the next year 2020 from a plurality of information manager-side apparatuses 100 through the interworking unit 210, and stores the values in the database 202 (S300).

In addition, the data quantization apparatus 200 collects data on the provision values, i.e., data on net income and operating income, that can be used as a reference value in relation to performance through interworking with the information manager-side apparatus 100 or various media (S302).

Then, the data quantization apparatus 200 calculates an average value of the collected provision values, and sets the average value as a comparison reference value (S304).

In addition, the data quantization apparatus 200 calculates quarterly average values of the current year with respect to the definite values of the current year, quarterly average values of the previous year with respect to the definite values of the previous year, quarterly average values of the next year with respect to the estimated values of the next year, and the like (S306).

Then, the data quantization apparatus 200 determines whether the first quarter average value of the current year is greater than the comparison reference value (S308).

The data quantization apparatus 200 calculates a score by assigning a negative weight (-a, a is a real number, a symbol, a character, or the like) when the first quarter average value of the current year is larger than the reference value as a result of the determination at S308, and a positive weight (a) when the first quarter average value of the current year is smaller than or equal to the reference value (S310, S312).

Quarterly scores of the current year, the previous year, and the next year may be calculated by repeatedly performing S308, S310, and S312 described above.

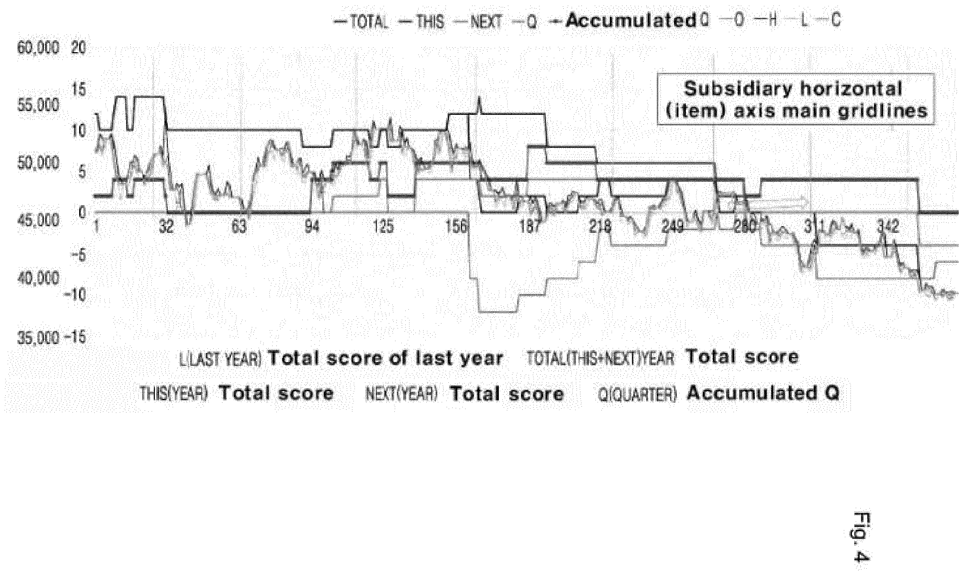

The data quantization apparatus 200 generates a graph (chart) based on the scores calculated through the steps as described above (S314). Specifically, the data quantization apparatus 200 generates a graph expressing the total score of the current year, the total score of the previous year, the total score of the next year, and a score obtained by adding the total score of the next year and the total score of the current year as shown in FIG. 4.

In addition, the data quantization apparatus 200 generates a graph for comparison that merges a chart corresponding to association data, for example, index-related data, with the graph (S316).

The operation process of the information manager-side apparatus 100 and the data quantization apparatus 200, in the case where the data is related to performance, the period is a quarter, and the current reference date is December 31, 2019, will be described as an example.

First, the plurality of information manager-side apparatuses 100 may provide quarterly performance definite values of the current year, quarterly performance estimated values of the next year, and quarterly performance definite values of the last year on the basis of the current reference date.

Accordingly, the data quantization apparatus 200 may calculate reference values, such as reference operating income, reference net income, and the like, based on the provision values provided by the plurality of information manager-side apparatuses 100.

Then, the data quantization apparatus 200 may calculate a score by assigning a weight through comparison of the quarterly operating income of the last year (operating income calculated based on the performance definite values) with the reference operating income on the basis of the current reference date. Specifically, the data quantization apparatus 200 may calculate a score by assigning a negative weight (-a) when the quarterly operating income is greater than the reference operating income, calculate a score by assigning a positive weight (a) when the quarterly operating income is smaller than or equal to the reference operating income, calculate a score by assigning a negative weight (-a) when the net income of the last year (net income calculated based on the performance definite value) is greater than the reference net income, and calculate a score by assigning a positive weight (a) when the quarterly net income is smaller than or equal to the reference net income.

In addition, the data quantization apparatus 200 may calculate a score by assigning a negative weight (-a) when the quarterly operating income of the next year (calculated based on the performance estimated value of the next year) is greater than the reference operating income, calculate a score by assigning a positive weight (a) when the quarterly operating income of the next year is smaller than or equal to the reference operating income, calculate a score by assigning a negative weight (-a) when the net income of the next year (net income calculated based on the performance estimated value) is greater than the reference net income, and calculate a score by assigning a positive weight (a) when the quarterly net income of the next year is smaller than or equal to the reference net income.

As described above, the data quantization apparatus 200 according to an embodiment of the present invention may calculate a score of each period preset based on the current reference date, e.g., 1 year, 2 years, ......, n years before and after the preset period, and a score of each year by adding the scores of the periods, and generate a quantized graph based on the calculated scores.

In addition, the data quantization apparatus 200 may generate a graph that compares the performance and the index. Specifically, the data quantization apparatus 200 may provide comparison data according to the tendency of change in the index with respect to the performance through comparison of the performance-related index change graph (provided from the outside) with the quantized graph.

Meanwhile, combinations of the blocks in the accompanying block diagram and the steps in the flowchart may be performed by computer program instructions. Since these computer program instructions may be mounted on a processor of a generalpurpose computer, a special-purpose computer, or other programmable data processing equipment, the instructions performed through the processor of the computer or other programmable data processing equipment create a means that performs the functions described in each block of the block diagram.

These computer program instructions may also be stored in a computer-usable or computer-readable recording medium (or memory) or the like, which may support a computer or other programmable data processing equipment, to implement the functions in a specific manner, so that the instructions stored in the computer-usable or computer-readable recording medium (or memory) may also produce manufactured products containing an instruction means for performing the functions described in each block of the block diagram.

In addition, since the computer program instructions may be mounted on a computer or other programmable data processing equipment, a series of operation steps are performed on the computer or other programmable data processing equipment to create a process executed by a computer, so that the instructions that operate the computer or other programmable data processing equipment may provide steps for performing the functions described in each block of the block diagram.

In addition, each block may represent a module, a segment, or part of a code including one or more executable instructions for executing specified logical function(s). In addition, it should also be noted that in some alternative embodiments, the functions mentioned in the blocks may be performed in an alternative order. For example, two blocks shown one after another may be performed simultaneously in practice, or the blocks may sometimes be performed in a reverse order according to a corresponding function.

### DESCRIPTION OF SYMBOLS

100: Information manager-side apparatus
200: Data quantization apparatus
210: Interworking unit
220: Data reception unit
230: Reference value generation unit
240: Score calculation unit
250: Quantization unit
260: Data analysis unit

## Claims

1. A data quantization method based on definite values and estimated values, the method comprising the steps of:
collecting, by a data quantization apparatus from at least two information manager-side apparatuses, data corresponding to a definite value of each preset period of a preset previous section based on a current date, an estimated value and a definite value of a current year based on the current date, and an estimated value of each period of a preset subsequent section based on the current date;
collecting a provision value that can be compared with the estimated values and the definite values, and calculating at least one comparison reference value on the basis of the provision value; and
quantizing the data of each period and section in a method of assigning a weight to the current year of each period and to each period of the previous section and subsequent section, by comparing the definite value of each period of the previous section, the definite value of each period of the current year, and the estimated value of each period of the subsequent section with the comparison reference value, wherein
the quantizing step includes the steps of:
calculating an average value for each period or each section using the definite value of each period of the previous section, the definite value of each period of the current year, and the estimated value of each period of the subsequent section;
calculating a score for each period of the previous section, the current year, and the subsequent section, by assigning a negative weight when the calculated average value is greater than the definite value or the estimated value of each period, and assigning a positive weight when the calculated average value is smaller than or equal to the definite value or the estimated value of each period;
calculating a total score of the previous section, the current year, and the subsequent section based on the score of each period of the previous section, the current year, and the subsequent section; and
generating a quantized graph using the total score and the score of each period of the previous section, the current year, and the subsequent section, and
the collected data are estimated and definite values of performance, and the provision value for comparison is net income and operating income, and an association data is an index-related graph.

2. The method according to claim 1, further comprising the steps of:
receiving association data related to the data from the outside; and
generating a comparative graph including a graph corresponding to the association data in a quantized graph.

3. The method according to claim 1, wherein the step of generating the comparison reference value includes the step of collecting the provision value through analysis of the data provided by a medium that posts data related to the provision value on the Internet, and then generating the comparison reference value on the basis of the collected provision value.
